# EUROPÄISCHE PATENTANMELDUNG

(11) **EP 3 409 554 A1**
(43) Veröffentlichungstag der Anmeldung: **05.12.2018**
(21) Anmeldenummer: 17173898.2
(22) Anmeldetag: 01.06.2017
(51) Int. Cl.: B61D 11/00, B61F 1/08, B61F 3/16, B61C 9/16, B61F 3/04, B60S 9/10, B61D 15/00

(54) **SCHIENENFAHRZEUG MIT ALLRADANTRIEB**

(71) Anmelder: Walo Bertschinger AG, 8953 Dietikon (CH)
(72) Erfinder: ZINGG, Bernhard, 8197 Rafz (CH)
(74) Vertreter: Detken, Andreas

(57) **Zusammenfassung**

Ein selbstfahrendes Schienenfahrzeug (1, 1') für den Transport von Arbeitsgeräten im Gleisbau weist mindestens ein Drehgestell (2) mit mindestens zwei Räder (21, 21') und mindestens zwei Antriebsvorrichtungen (22, 22') auf, welche die Räder (21, 21') jeweils einzeln antreiben. Die Antriebsvorrichtungen (22, 22') sind bezüglich einer Längsrichtung (L) zueinander versetzt im Drehgestell (2) angeordnet. Das Schienenfahrzeug (1') weist Stützen (31, 31', 31", 31") auf, welche teleskopierbar und um eine Tragrahmenquerrichtung (Q) verschwenkbar sind. Ein Verfahren zum Verladen eines Schienenfahrzeugs (1') umfasst das Ausfahren der Stützen (31, 31', 31", 31"), so dass ein Transportfahrzeug (6) unter das angehobene Schienenfahrzeug (1`) gelangt. Ein Verfahren zum lateralen Versetzen eines Schienenfahrzeugs (1') umfasst das Ausfahren der Stützen (31, 31', 31", 31"), und das Verschieben der Stützen relativ zum Tragrahmen (11) entlang der Tragrahmenquerrichtung (TQ).

## Beschreibung

### TECHNISCHES GEBIET

Die vorliegende Erfindung betrifft ein selbstfahrendes Schienenfahrzeug für den Transport von Arbeitsgeräten im Gleisbau, sowie ein Verfahren zum Verladen eines solchen Schienenfahrzeugs auf ein Transportfahrzeug beziehungsweise zum lateralen Versetzen eines solchen Schienenfahrzeugs.

### STAND DER TECHNIK

Im Berg- und Gleisbau wie z.B. im Tunnelbau kann ein Material- und Gerätetransport über schienengebundene Materialzüge erfolgen.

So ist es aus der DE 27 48 850 A1 bekannt, hierzu einen Ladegutwagen mit einem Triebfahrzeug zu versehen, welches den Ladegutwagen befördert. Das Triebfahrzeug verfügt über Antriebsräder, welche mit Radnabenmotoren einzeln angetrieben werden.

In der EP 1 889 770 A1 wird ein Bau- und Erhaltungszug für den Schieneneinsatz offenbart, welcher modular aufgebaut ist und Einzelfahrzeuge mit Eigenmotorisierung aufweist. Dabei werden Triebdrehgestelle eingesetzt, deren Antriebsachsen einzeln angetrieben werden. Funktionselemente wie Container können mit einer systemimmanenten oder einer externen Hubeinrichtung z.B. in Form eines Krans, auf- und abgesetzt werden.

Insbesondere im Schmalspurbau, jedoch auch im Normalspurbau, steht einer Transportvorrichtung aufgrund des engen Lichtraumprofils allerdings wenig Platz zur Verfügung. Da die Transportvorrichtungen dennoch in der Lage sein müssen, auch grosse Steigungs- und Gefällstrecken zu durchfahren, ist nicht nur eine möglichst platzsparende Konstruktion der Transportvorrichtung, sondern auch ein starker Antrieb der Transportvorrichtung von grosser Bedeutung. Gleichzeitig ist es jedoch auch wünschenswert, dass die Transportvorrichtung nicht nur die sehr spezifischen Anforderungen für die Arbeiten im Schmalspurbau erfüllt, sondern beispielsweise auch Anforderungen im Zusammenhang mit vorbereitenden Arbeiten im Vorfeld zum eigentlichen Ausbau der Schmalspur berücksichtigt.

### DARSTELLUNG DER ERFINDUNG

In einem ersten Aspekt ist es daher eine Aufgabe der vorliegenden Erfindung, ein selbstfahrendes Schienenfahrzeug für den Transport von Arbeitsgeräten im Gleisbau anzugeben, welches in der Lage ist, ein zur Verfügung stehendes Lichtraumprofil optimal zu Nutzen. Insbesondere soll das Schienenfahrzeug bei vorgegebenem Lichtraumprofil grosse Lasten transportieren können und eine hohe Einsatzflexibilität aufweisen.

Diese Aufgabe wird durch ein selbstfahrendes Schienenfahrzeug mit den Merkmalen des Anspruchs 1 gelöst.

In einem ersten Aspekt wird also ein selbstfahrendes Schienenfahrzeug für den Transport von Arbeitsgeräten im Gleisbau angegeben, welches einen Tragrahmen, der eine Ladefläche zum Aufnehmen der Arbeitsgeräte aufweist, und mindestens ein Drehgestell, welches mit dem Tragrahmen in Verbindung steht und welches mindestens zwei Räder aufweist, umfasst. Die zwei Räder sind einander gegenüberliegend koaxial im Drehgestell angeordnet. Das Drehgestell weist weiter mindestens zwei Antriebsvorrichtungen auf, wobei jede der Antriebsvorrichtungen dazu ausgebildet ist, eines der Räder einzeln anzutreiben. Die Antriebsvorrichtungen sind zueinander versetzt im Drehgestell angeordnet.

In anderen Worten wird ein Schienenfahrzeug mit Eigenantrieb sowie Allradantrieb angegeben. Der Allradantrieb ermöglicht einen starken Antrieb des Schienenfahrzeugs, wobei aufgrund des Eigenantriebs beispielsweise kein zusätzliches Zugfahrzeug zum Antrieb des Schienenfahrzeugs benötigt wird. Stattdessen können die zu transportierenden Arbeitsgeräte mit dem selbstfahrenden Schienenfahrzeug selbst an die gewünschte Stelle transportiert werden. Die versetzte Anordnung der Antriebsvorrichtungen ermöglicht es, die Antriebsvorrichtungen selbst dann im Bereich des Drehgestells unterzubringen, wenn wenig Platz zwischen den Rädern vorhanden ist. Das vorliegende Schienenfahrzeug verfügt somit über eine platzsparende Konstruktion, die es dem Schienenfahrzeug ermöglicht, auch bei beschränkten Platzanforderungen, wie es zum Beispiel beim Schmalspurbau der Fall ist, zum Einsatz zu kommen.

Jedes der Räder kann über eine Kardanwelle mit der jeweiligen Antriebsvorrichtung verbunden sein. Die Kardanwellen ermöglichen es, den Achsversatz aufgrund der zueinander versetzten Antriebsvorrichtungen besonders leicht zu überbrücken.

Das Drehgestell kann einen Drehgestellrahmen umfassend zwei entlang einer Längsrichtung verlaufende Längsträger und einen entlang einer Querrichtung verlaufenden Querträger aufweisen, wobei das jeweilige Rad am einen Längsträger und die dieses Rad antreibende Antriebsvorrichtung am gegenüberliegenden Längsträger befestigt sein kann.

Vorzugsweise weist das Drehgestell vier Räder und vier Antriebsvorrichtungen zum Einzelantrieb der vier Räder auf, wobei zwei der vier Räder und die zugehörigen Antriebsvorrichtungen proximal vom Querträger und die anderen zwei der vier Räder und die zugehörigen Antriebsvorrichtungen distal vom Querträger im Drehgestell angeordnet sind. Das heisst, das Drehgestell kann im Wesentlichen H-förmig ausgebildet sein, wobei sich jeweils zwei Räder an den einander gegenüberliegenden Längsschenkeln des H-förmigen Drehgestellrahmens befinden.

Es versteht sich, dass auch im Falle von vier Rädern diese jeweils über eine Kardanwelle mit der jeweiligen Antriebsvorrichtung verbunden sein können, wobei sowohl die Antriebsvorrichtungen wie auch die Kardanwellen bezüglich der Längsrichtung zueinander versetzt im Drehgestell angeordnet sind.

Die Antriebsvorrichtungen können sich innerhalb des durch die Längsträger sowie den Querträger definierten Lichtmasses befinden. Anders gesagt können die Längs- bzw. der Querträger des Drehgestells bezüglich einer durch die Radachse definierten Ebene nach unten, beispielsweise in Richtung einer Schienenoberfläche, ragen. Die Antriebsvorrichtungen sind dann vorzugsweise derart im Drehgestell angeordnet, dass diese um nicht mehr als denselben Betrag wie die Längs- bzw. Querträger nach unten ragen. Dieser Versatz in Höhenrichtung wie auch der Versatz in Längsrichtung kann leicht durch die Kardanwellen ausgeglichen werden. Diese Ausgestaltung ermöglicht somit ein Schienenfahrzeug mit viel Bodenfreiheit zwischen den Rädern, bei welchem die Antriebsvorrichtungen nicht im Lichtraumprofil über der Schienenoberfläche zu liegen kommen.

Die Antriebsvorrichtungen können jeweils eine Antriebsachse aufweisen, welche sich oberhalb einer durch die Radachsen der Räder definierten Ebene befinden. Oder anders gesagt können die Antriebsvorrichtungen relativ zu den Rädern nach oben versetzt im Drehgestell angeordnet sein. Oberhalb bzw. nach oben versetzt heisst hier, dass die Antriebsachsen der Antriebsvorrichtungen in vertikaler Richtung gesehen weiter von der Schienenoberfläche entfernt sind als es die Radachsen der Räder sind.

Vorzugsweise sind die Antriebsvorrichtungen jeweils Hydraulikmotoren. Das Schienenfahrzeug kann weiter einen Dieselmotor umfassen, welcher eine Mehrzahl von Hydraulikpumpen antreibt, wobei jede der Hydraulikpumpen dazu ausgebildet ist, jeweils eine der Antriebsvorrichtungen, also einen Hydraulikmotor, im Drehgestell hydraulisch anzutreiben. Bevorzugt wird dabei jeweils ein Hydraulikkreis pro Rad bereitgestellt. Die Hydraulikmotoren können die Energie des Dieselmotors beispielsweise über Leitungen erhalten, welche sich ausgehend vom Dieselmotor durch den Tragrahmen zum Drehgestell hin erstrecken, wobei die Energie von den Hydraulikmotoren über die Kardanwellen an die Räder abgegeben werden kann.

Anders als ein elektrischer Antrieb kann diese Dieselhydraulik ein sehr grosses Drehmoment übertragen und dabei gleichzeitig die beschränkten Platzanforderungen an das Schienenfahrzeug erfüllen.

Jedes Rad kann über eine Antriebsschlupfregulierung und/oder eine dynamische Betriebsbremse und/oder eine statische Parkbremse verfügen. Hierzu können auf jedem Rad einzeln eine Antriebsschlupfregelung bzw. Traktionskontrolle wie auch Bremsen verwendet werden, wie sie dem Fachmann allgemein bekannt sind. Zudem ist es denkbar, die Bremsen als Zweikreisbremsanlage vorzusehen, was zu einer erhöhten Betriebssicherheit des Schienenfahrzeugs führt.

In einem zweiten Aspekt wird ein Schienenfahrzeug, insbesondere ein selbstfahrendes Schienenfahrzeug wie oben beschrieben, für den Transport von Arbeitsgeräten im Gleisbau angegeben, welches einen Tragrahmen mit einem proximalen Ende und einem distalen Ende umfasst. Der Tragrahmen weist eine Ladefläche zum Aufnehmen der Arbeitsgeräte auf und definiert eine Tragrahmenlängsrichtung, welche sich vom proximalen Ende zum distalen Ende des Tragrahmens erstreckt. Das Schienenfahrzeug umfasst weiter mindestens zwei Räder und teleskopierbare Stützen. Die Stützen weisen einen genügend grossen Hubweg auf, so dass das Schienenfahrzeug mittels der Stützen von einer Oberfläche abhebbar ist, um das Schienenfahrzeug auf ein Transportfahrzeug zu verladen.

Das heisst, mittels der teleskopierbaren Stützen kann das Schienenfahrzeug in mindestens zwei unterschiedliche Positionen überführt werden. In der einen Position, der Verladeposition, wird ein Verladen des Schienenfahrzeugs auf ein Transportfahrzeug dadurch ermöglicht, dass die Stützen derart in ihrer Länge verändert werden, dass die Stützen zunächst auf einer Oberfläche aufsetzen und alsdann weiter in ihrer Länge verändert respektive vergrössert werden, so dass das Schienenfahrzeug zunehmend vertikal vom Boden angehoben wird. Ist der zurückgelegte Hubweg der Stützen gross genug, so kann ein Transportfahrzeug unter das Schienenfahrzeug fahren und dieses aufladen. Hierbei erfüllen die Stützen also eine Hebefunktion. Sind die Stützen allerdings einzig auf der Oberfläche abgesetzt und heben dabei das Schienenfahrzeug nicht oder kaum von der Oberfläche ab, so dienen die Stützen einer Verbesserung der Standfestigkeit des Schienenfahrzeugs. Diese Position kann auch als Arbeitsposition bezeichnet werden. Daraus ergibt sich der Vorteil, dass eine Nutzung der Arbeitsgeräte erfolgen kann, während dem diese sich auf dem Schienenfahrzeug befinden. Das heisst, die Stützen erfüllen eine Stabilisierungsfunktion, aufgrund welcher es nicht mehr nötig ist, die Arbeitsgeräte für deren Einsatz an einem Einsatzort zunächst vom Schienenfahrzeug abzuladen. Bei der Oberfläche kann es sich insbesondere um ein Gleisbett handeln.

Das heisst, das Schienenfahrzeug gemäss dem zweiten Aspekt kann wie folgt auf ein Transportfahrzeug verladen werden. Zunächst werden die Stützen ausgefahren, so dass das Schienenfahrzeug von einer (Schienen-)Oberfläche angehoben wird und das Transportfahrzeug unter das angehobene Schienenfahrzeug gelangen kann. Dann werden die Stützen eingefahren, so dass das Schienenfahrzeug auf dem Transportfahrzeug abgesetzt wird.

Die Stützen können einen Hubweg aufweisen, welcher mindestens einen Meter beträgt. Der Hubweg kann zum Beispiel zwischen 0.2 bis 1.5 Meter betragen.

Ein Hubweg von circa 1.1 Meter ermöglicht, dass ein Transportfahrzeug wie beispielsweise ein Lastkraftwagen unter das sich in der Verladeposition befindende Schienenfahrzeug fahren und dieses für einen Abtransport aufladen kann. Ein Hubweg von circa 0.4 bis 0.7 Meter hingegen ermöglicht eine gute Standfestigkeit des Schienenfahrzeugs in der Arbeitsposition.

Die Stützen können um eine senkrecht zur Tragrahmenlängsrichtung verlaufende Tragrahmenquerrichtung in eine Parkstellung verschwenkbar sein, wobei sich die Stützen in der Parkstellung vorzugsweise entlang des Tragrahmens in Tragrahmenlängsrichtung erstrecken.

Weiter kann das Schienenfahrzeug einen Ausschubmechanismus umfassen, der bewirkt, dass die Stützen relativ zum Tragrahmen entlang der Tragrahmenquerrichtung verschiebbar sein, während das Schienenfahrzeug mittels der Stützen aus dem Gleisbett gehoben ist, so dass das Schienenfahrzeug mittels der Stützen lateral versetzbar ist. Das Schienenfahrzeug gemäss dem zweiten Aspekt kann wie folgt lateral versetzt werden. Zunächst werden die Stützen ausgefahren, so dass das Schienenfahrzeug von einer Oberfläche angehoben wird. Dann werden die Stützen relativ zum Tragrahmen entlang der Tragrahmenquerrichtung verschoben, während das Schienenfahrzeug mittels der Stützen aus dem Gleisbett gehoben ist, um das Schienenfahrzeug mittels der Stützen lateral zu versetzen.

Vorzugsweise weist das Schienenfahrzeug dazu vier Stützen auf, wobei sich zwei Stützen am proximalen Ende und zwei Stützen am distalen Ende des Tragrahmens jeweils lateral gegenüberliegen. Das Heben und Senken des Schienenfahrzeugs kann dabei über hydraulische Hubstützen erfolgen, welche in vertikaler Richtung heb- und senkbar sind.

Das Verschieben der Stützen entlang der Tragrahmenquerrichtung und das Verschwenken der Stützen um die Tragrahmenquerrichtung können über einen Verstellmechanismus erfolgen, welcher in einem mit dem Tragrahmen verbundenen Tragrohr angeordnet ist. Vorzugsweise ist jede Stütze jeweils mit einem Tragrohr in Verbindung. Beispielsweise können im proximalen Bereich sowie im distalen Bereich des Tragrahmens jeweils zwei Stützen und zwei Tragrohre vorgesehen sein, wobei die Tragrohre axial versetzt zueinander im Tragrahmen angeordnet sind.

Der Verstellmechanismus kann über den obgenannten Ausschubmechanismus verfügen, welcher ein laterales Ausschieben der Stützen in eine ausgeschobene Stellung beziehungsweise ein laterales Einschieben der Stützen in eine eingeschobene Stellung ermöglicht. Zudem kann der Verstellmechanismus über einen Verschwenkmechanismus sowie einen Verriegelungsmechanismus verfügen, wobei der Verschwenkmechanismus ein Verschwenken der Stützen um die Tragrahmenquerrichtung in eine horizontale Schwenkstellung und in eine vertikale Schwenkstellung ermöglicht, und wobei der Verriegelunsgmechanismus ein Verschwenken der Stützen verhindert beziehungsweise freigibt.

Der Ausschubmechanismus kann einen Ausschubzylinder und ein Ausschubrohr umfassen, wobei das Ausschubrohr gegenüber dem Tragrohr teleskopierbar ist. Der Ausschubzylinder ist vorzugsweise ortsfest im Tragrohr angeordnet und wirkt auf das Ausschubrohr, um dieses aus dem Tragrohr auszuschieben. Das Tragrohr und das Ausschubrohr können einen nichtrunden, insbesondere rechteckigen Querschnitt, aufweisen, wodurch eine drehfeste Verbindung zwischen dem Tragrohr und dem Ausschubrohr bereitgestellt werden kann

Der Verriegelungsmechanismus kann sich im Ausschubrohr befinden und einen Verriegelungszylinder, ein Zugrohr, eine Klauenplatte, sowie ein komplementär zur Klauenplatte ausgebildetes Gegenstück umfassen. Der Verriegelungszylinder ist vorzugsweise drehbar und axial fix im Ausschubrohr gelagert. Das Zugrohr kann gegenüber dem Ausschubrohr axial verschiebbar sein, wobei der Verriegelungszylinder auf das Zugrohr wirkt, um dieses im Ausschubrohr axial zu verschieben. Das Gegenstück kann am Ende des Ausschubrohres fest angebracht und das Zugrohr kann mit einem Stützenkopf der Stütze fest verbunden sein. Die Klauenplatte kann dabei Teil des Stützenkopfs sein. Wird die Klauenplatte durch das Zugrohr zurückgezogen, wird diese in formschlüssigen Eingriff mit dem Gegenstück gebracht. Dadurch wird eine Schwenkbewegung des Stützenkopfs, und somit der Stütze, gegenüber dem Ausschubrohr verhindert.

Der Verschwenkmechanismus kann einen Schwenkantrieb oder einen Schwenkzylinder sowie einen Drehstab umfassen, wobei der Schwenkantrieb ortsfest am Tragrohr angeordnet ist und der Drehstab gegenüber dem Zugrohr drehfest sowie teleskopierbar ist. Der Drehstab kann sich entlang dem Ausschubzylinder durch das Ausschubrohr sowie durch den Verriegelungszylinder hindurch und alsdann in das Zugrohr hinein erstrecken. Der Drehstab dient dazu, eine Schwenkbewegung des Schwenkantriebs auf das Zugrohr zu übertragen. Da das Zugrohr mit dem Stützenkopf der Stütze verbunden ist, wird die Schwenkbewegung ebenfalls auf die Stütze übertragen.

Dadurch, dass der Verstellmechanismus nicht nur ein Aufladen, sondern auch ein seitliches Versetzen des Schienenfahrzeugs ermöglicht, wird die Einsatzflexibilität des Schienenfahrzeugs zusätzlich erhöht. Beispielsweise können (Tunnel-)Arbeiten ausgeführt werden, während dem das Arbeitsgerät auf dem Schienenfahrzeug verbleibt und sich das Schienenfahrzeug an einer ersten Arbeitsstelle im Tunnel befindet. Zudem kann das Schienenfahrzeug aufgrund des Verstellmechanismus zum Beispiel auch von den Schienen auf den Boden, und umgekehrt, versetzt werden und so dank seines Eigenantriebs selbständig an weitere Arbeitsstellen fahren.

In der anderen Position, der Parkposition, wird ein Transport der Arbeitsgeräte mittels des Schienenfahrzeugs beziehungsweise der Transport des Schienenfahrzeugs mittels des Transportfahrzeugs, beispielsweise an einen entfernten Einsatzort, ermöglicht. Dazu können sich die Stützen in der Transportposition in Tragrahmenlängsrichtung lateral entlang des Tragrahmens erstrecken. Das heisst, soll ein Fortbewegen der zu transportierenden Arbeitsgeräte mit dem Schienenfahrzeug oder des aufgeladenen Schienenfahrzeugs selbst erfolgen, so sollen sich die Stützen nicht mehr in Richtung des Bodens erstrecken bzw. auf dem Boden aufliegen, sondern werden stattdessen entlang der Tragrahmenquerrichtung in eine horizontale Lage verschwenkt.

Das Schienenfahrzeug kann somit als eine mobile Arbeitsplattform verstanden werden, welche nicht nur den Transport von Arbeitsgeräten wie auch den Betriebseinsatz der Arbeitsgeräte auf dem Schienenfahrzeug erlaubt, sondern welche selbst auf einfache Weise an unterschiedliche Einsatzorte transportiert werden kann.

Es gilt zu verstehen, dass sämtliche Ausführungen betreffend das selbstfahrende Schienenfahrzeug gemäss dem ersten Aspekt auch für das Schienenfahrzeug gemäss dem zweiten Aspekt, beziehungsweise dass sämtliche Ausführungen betreffend das Schienenfahrzeug gemäss dem zweiten Aspekt auch für das selbstfahrende Schienenfahrzeug gemäss dem ersten Aspekt gelten. Das heisst, insbesondere ist es denkbar, das Schienenfahrzeug gemäss dem ersten Aspekt mit Stützen und einem Verstellmechanismus vorzusehen und das Schienenfahrzeug gemäss dem zweiten Aspekt mit einem Allradantrieb vorzusehen, dessen Antriebsvorrichtungen über die oben erläuterte, längs zueinander versetze Anordnung verfügen. Auch die folgenden Ausführungen beziehen sich auf Merkmale, die sowohl beim Schienenfahrzeug gemäss dem ersten wie auch dem zweiten Aspekt vorhanden sein können.

Das Schienenfahrzeug kann weiter eine Rampe zum Be- und Entladen der Arbeitsgeräte umfassen, wobei die Rampe insbesondere am distalen Ende des Tragrahmens schwenkbar am Schienenfahrzeug gelagert ist.

Die Rampe führt zu einer Reduktion der Beladezeit, während welcher die Arbeitsgeräte auf die Ladefläche des Schienenfahrzeugs aufgeladen beziehungsweise von der Ladefläche herunter geladen werden. Denn anders als bei gewissen Gerätetransportvorrichtungen aus dem Stand der Technik, bei welchen die Geräte oftmals mit einer Hebevorrichtung wie beispielsweise einem Kran auf die Ladefläche der Transportvorrichtung gehoben und von dieser wieder herabgenommen werden, kann die Rampe beim vorliegenden Schienenfahrzeug heruntergeklappt werden und so eine Auffahrt für die Arbeitsgeräte bereitstellen. Dadurch wird das Be- und Entladen vereinfacht wie auch an begrenzten Umschlagstellen möglich, welche für die genannten Gerätetransportvorrichtungen mit ihren Hebevorrichtungen möglicherweise zu klein wären.

Das Schienenfahrzeug kann mindestens ein Drehgestell, vorzugsweise ein weiteres Drehgestell, umfassen, wobei insbesondere das Drehgestell in einem proximalen Bereich des Tragrahmens und das weitere Drehgestell in einem distalen Bereich des Tragrahmens am Tragrahmen angeordnet sind.

Das heisst, das Schienenfahrzeug weist vorzugsweise zwei Drehgestelle auf, welche sich an den jeweiligen Endbereichen des Schienenfahrzeugs befinden. Die Drehgestelle können dabei über vier Räder verfügen, welche jeweils wie oben beschrieben mittels Kardanwellen und den versetzt zueinander angeordneten Hydraulikmotoren einzeln angetrieben werden. Je nach Grösse des Schienenfahrzeugs ist es allerdings auch denkbar, beispielsweise nur ein Drehgestell zu verwenden.

Der Tragrahmen kann lateral über Verbindungsmittel verfügen, welche mit entsprechenden Verbindungsmitteln an Seitenwänden zur lateralen Begrenzung der Ladefläche und/oder an Zusatzplatten zur Verbreiterung der Ladefläche in Tragrahmenquerrichtung verbindbar sind.

So ist es denkbar, dass der Tragrahmen lateral über Nuten verfügt, in welche entsprechende Rastnasen an Seitenwänden oder an Zusatzplatten eingreifen können. Eine andere Möglichkeit wäre eine Verbindung basierend auf eingeschweissten Rohren oder Taschen, welche eine Aufnahme für Rungen und Verbreiterungen bilden.

Das Schienenfahrzeug kann weiter eine Steuereinrichtung zur Steuerung des Schienenfahrzeugs umfassen, wobei die Steuereinrichtung vorzugsweise eine Funksteuerung ist.

Zum Beispiel kann eine Funksteuerung in Form eines Funksenders, welcher von einem das Schienenfahrzeug bedienenden Maschinisten bedient wird, und eines Funkempfängers, welcher sich am Schienenfahrzeug befindet und dazu konfiguriert ist, die vom Funksender ausgesendeten Funksignale zu empfangen, vorgesehen sein. Je nach Funkfrequenz, mit der gesendet wird, können verschiedene Betriebszustände wie Anschalten/Abschalten des Dieselmotors oder Vorwäntsantrieb/Rückwärtsantrieb der Drehgestelle eingestellt werden. Aufgrund der Funkübertragung wird eine Bedienung des Schienenfahrzeugs ermöglicht, bei welcher sich der Maschinist nicht zwingendermassen auf dem Schienenfahrzeug befinden muss.

Alternativ kann jedoch auch eine Steuereinrichtung vorgesehen sein, welche als direkte Eingabestelle für die verschiedenen Betriebszustände am Schienenwagen selbst ausgebildet ist.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: einen Teilschnitt entlang der in Figur 2 gekennzeichneten Schnittebene I-I durch ein selbstfahrendes Schienenfahrzeug mit zwei Drehgestellen gemäss einer ersten Ausführungsform;
- Fig. 2: eine Draufsicht auf das Schienenfahrzeug gemäss Figur 1;
- Fig. 3: eine perspektivische Ansicht eines Drehgestells gemäss Figur 1;
- Fig. 4: eine Draufsicht auf das Drehgestell gemäss Figur 3;
- Fig. 5: eine perspektivische Ansicht eines selbstfahrenden Schienenfahrzeugs gemäss einer zweiten Ausführungsform mit Stützen in der Parkstellung;
- Fig. 6: eine Seitenansicht des Schienenfahrzeugs gemäss Figur 5;
- Fig. 7: eine perspektivische Ansicht eines selbstfahrenden Schienenfahrzeugs gemäss der zweiten Ausführungsform mit Stützen in der Verladestellung;
- Fig. 8: eine Seitenansicht des Schienenfahrzeugs gemäss Figur 7 mit darunter verfahrenem Verladefahrzeug;
- Fig. 9: eine perspektivische Teilansicht des selbstfahrenden Schienenfahrzeugs gemäss der zweiten Ausführungsform mit Stützen in der Parkstellung;
- Fig. 10: eine Detailansicht des Bereichs A von Figur 9;
- Fig. 11: eine perspektivische Ansicht eines Verstellmechanismus für die Stützen gemäss Figur 10;
- Fig. 12: eine Explosionsansicht des Verstellmechanismus ohne Tragrohr;
- Fig. 13: einen Teilschnitt entlang der in Figur 11 gekennzeichneten Schnittebene J-J durch den Verstellmechanismus in einer eingefahrenen Stellung;
- Fig. 14: eine Schnittansicht des Verstellmechanismus entlang der Ebene B-B in Figur 13 im entkoppelten Zustand;
- Fig. 15: eine Detailansicht des Bereichs A von Figur 9 mit dem Verstellmechanismus in einer teilweise ausgefahrenen Stellung;
- Fig. 16: eine perspektivische Ansicht des Verstellmechanismus in der teilweise ausgefahrenen und in einer verschwenkten Stellung;
- Fig. 17: einen Teilschnitt entlang der in Figur 15 gekennzeichneten Schnittebene K-K durch den Verstellmechanismus in der teilweise ausgefahrenen Position;
- Fig. 18: eine Schnittansicht des Verstellmechanismus entlang der Ebene C-C in Figur 17.

### BESCHREIBUNG BEVORZUGTER AUSFÜHRUNGSFORMEN

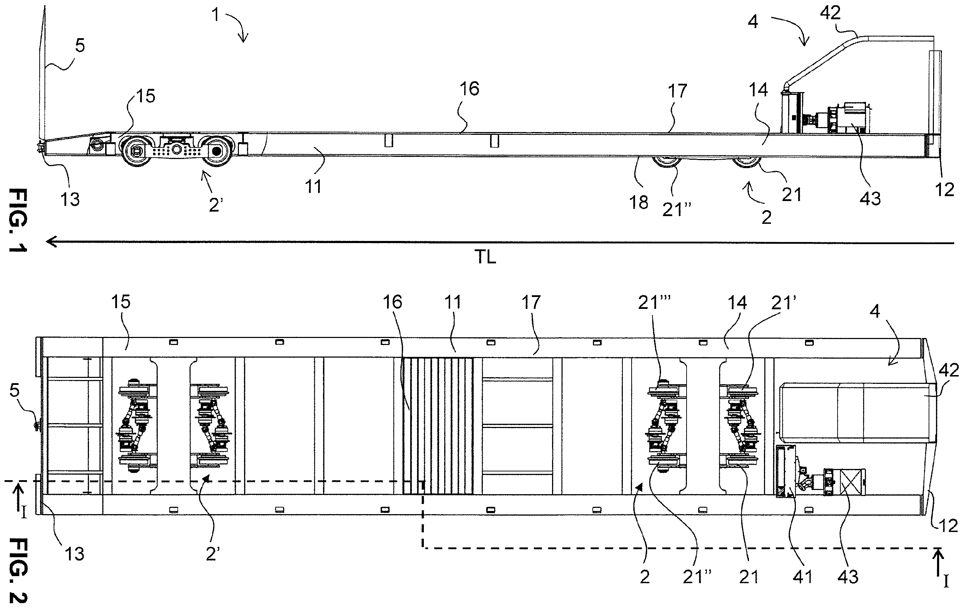

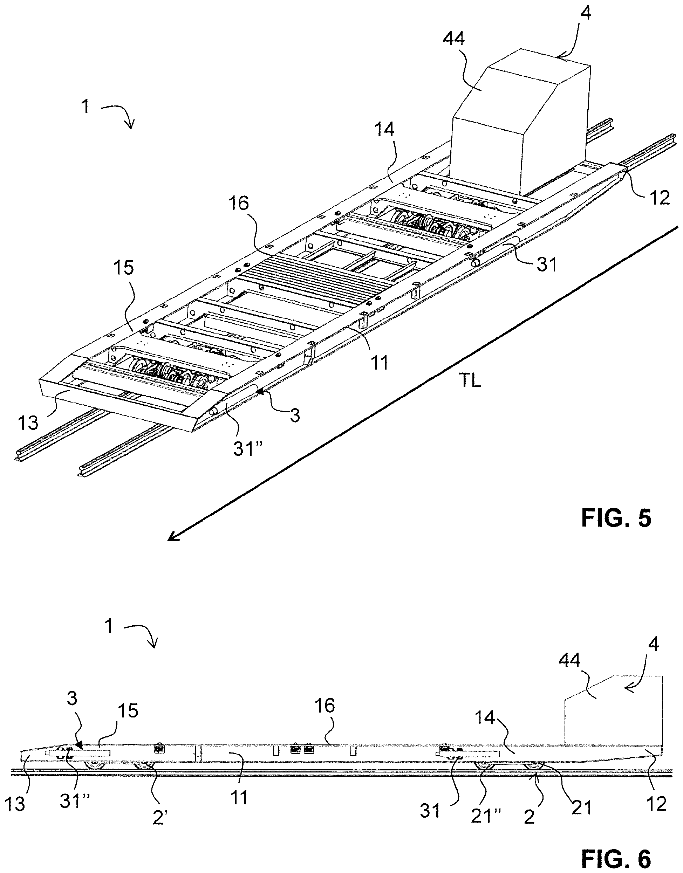

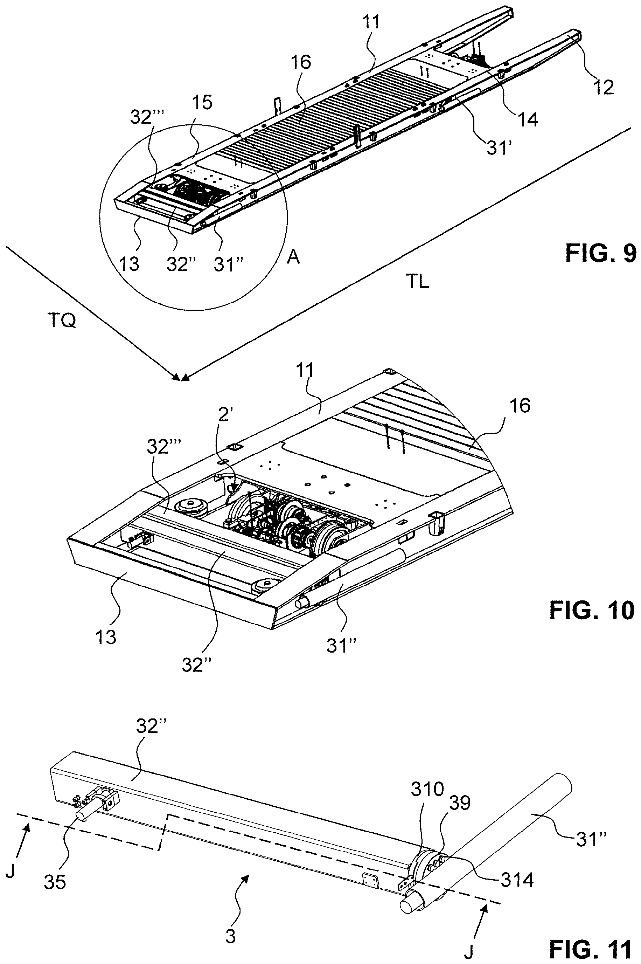

In den Figuren 1 bis 4 wird ein selbstfahrendes Schienenfahrzeug 1 für den Transport von Arbeitsgeräten im Gleisbau gemäss einer ersten Ausführungsform dargestellt, und ein selbstfahrendes Schienenfahrzeug 1' gemäss einer zweiten Ausführungsform wird in den Figuren 5 bis 8 gezeigt. Gleiche Elemente werden dabei jeweils mit denselben Bezugszeichen gekennzeichnet. Das selbstfahrende Schienenfahrzeug 1' gemäss der zweiten Ausführungsform weist einen Verstellmechanismus 3 auf, auf welchen im Zusammenhang mit den Figuren 9 bis 18 detailliert eingegangen wird.

Wie aus den Figuren 1 und 2 hervorgeht, weist das Schienenfahrzeug 1 einen Tragrahmen 11 mit einem proximalen Ende 12 und einem distalen Ende 13 auf. Die Richtung zwischen dem proximalen Ende 12 und dem distalen Ende 13 des Tragrahmens wird hier als Tragrahmenlängsrichtung TL definiert. Die zur Tragrahmenlängsrichtung TL quer verlaufende Richtung wird als Tragrahmenquerrichtung TQ bezeichnet. Als vertikale Richtung V wird diejenige Richtung verstanden, welche sich ausgehend vom Boden oder einer Schienenoberfläche zum Schienenfahrzeug 1 hin nach oben erstreckt.

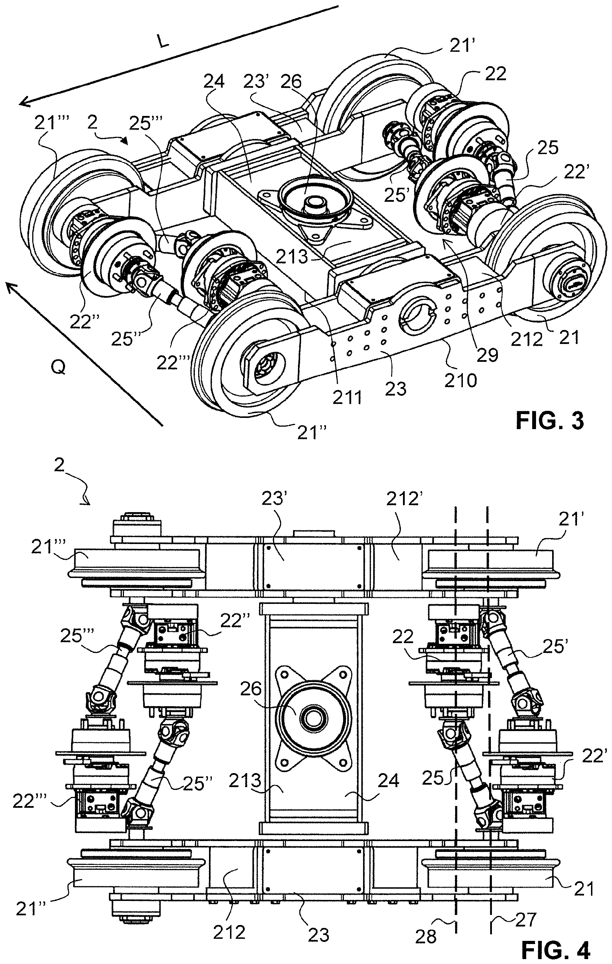

Auf seiner Oberseite 17 weist der Tragrahmen 11 eine Ladefläche 16 zum Aufnehmen der Arbeitsgeräte auf. Auf seiner Unterseite 18 verfügt der Tragrahmen 11 über zwei Drehgestelle 2, 2', welche hier in einem proximalen Bereich 14 sowie in einem distalen Bereich 15 des Tragrahmens 11 angeordnet sind. Die Drehgestelle 2, 2' verfügen jeweils über vier Räder 21, 21', 21", 21''' und vier Hydraulikmotoren 22, 22', 22", 22''', welche von jeweils einer Hydraulikpumpe 41 angetrieben werden. Die Hydraulikpumpen 41 werden wiederum von einem Dieselmotor 42 angetrieben. Wie aus diesen Figuren hervorgeht, ist der Dieselmotor 42 zusammen mit einem Generator 43 und den Hydraulikpumpen 41 im proximalen Bereich 14 des Tragrahmens 11 angeordnet. Der Dieselmotor 42, die Hydraulikpumpen 41 und der Generator 43 bilden eine Antriebseinheit 4, die von einer Motorhaube 44 bedeckt sein kann (siehe Figuren 5 bis 7). Die Hydraulikmotoren 22, 22', 22", 22''' in den Drehgestellen 2,2' können die Energie der Hydraulikpumpen 41 über Leitungen (nicht dargestellt) erhalten, welche sich ausgehend von den Hydraulikpumpen 41 durch den Tragrahmen 11 zu den Drehgestellen 2, 2' hin erstrecken. Auf die Drehgestelle 2, 2' wird im Zusammenhang mit den Figuren 3 und 4 genauer eingegangen. Am distalen Ende 13 weist das Schienenfahrzeug 1 eine um die Tragrahmenquerrichtung TQ verschwenkbare Rampe 5 auf, welche zum Aufladen der Arbeitsgeräte herunter geklappt werden kann und so eine Auffahrt für die Arbeitsgeräte auf die Ladefläche 16 des Schienenfahrzeugs 1 bereitstellt. Das Entladen der Arbeitsgeräte erfolgt entsprechend ebenfalls über die heruntergeklappte Rampe 5. Nachdem die Arbeitsgeräte auf das Schienenfahrzeug 1 aufgeladen respektive vom Schienenfahrzeug 1 abgeladen wurden, kann die heruntergeklappte Rampe 5 in ihre vertikale Position zurückverschwenkt werden, wie dies in Figur 1 gezeigt ist.

Ein einzelnes Drehgestell 2 ist in den Figuren 3 und 4 gezeigt. Das Drehgestell 2 wird aus einem Drehgestellrahmen gebildet, welcher im Wesentlichen eine H-Form aufweist und aus zwei entlang einer Längsrichtung L verlaufenden Längsträgern 23, 23' und aus einem entlang einer Querrichtung Q verlaufenden Querträger 24 besteht. Das Drehgestell 2 ist dabei über eine Drehpfanne 26 an der Oberseite 213 des Querträgers 24 mit dem Tragrahmen 11 verbunden und weist vier Räder 21, 21', 21", 21''' und vier Hydraulikmotoren 22, 22', 22", 22''' zum Einzelantrieb der vier Räder auf. Dabei sind zwei der vier Räder 21, 21' und die zugehörigen Hydraulikmotoren 22, 22' proximal vom Querträger 24 und die anderen zwei der vier Räder 21", 21''' und die zugehörigen Hydraulikmotoren 22", 22''' distal vom Querträger 24 im Drehgestell 2 angeordnet, wobei die zwei proximal vom Querträger 24 angeordneten Räder 21, 21' respektive die zwei distal vom Querträger 24 angeordneten Räder 21", 21''' jeweils bezüglich der Querrichtung Q einander gegenüberliegend sowie koaxial im Drehgestell 2 angeordnet sind. Weiter sind das jeweilige Rad am einen Längsträger und der dieses Rad antreibende Hydraulikmotor am gegenüberliegenden Längsträger befestigt. Die Räder 21, 21', 21", 21''' sind jeweils über eine Kardanwelle 25, 25', 25", 25''' mit ihrem zugehörigen Hydraulikmotor 22, 22', 22", 22''' verbunden. Sowohl die Hydraulikmotoren 22, 22', 22", 22''' wie auch die mit den Rädern 21, 21', 21", 21''' verbundenen Kardanwellen 25, 25', 25", 25''' sind bezüglich der Längsrichtung L zueinander versetzt im Drehgestell 2 angeordnet.

Wie insbesondere aus den Figuren 1 und 3 hervorgeht, befinden sich die Hydraulikmotoren 22, 22', 22", 22''' innerhalb des durch den Drehgestellrahmen definierten Lichtmasses 29. Anders gesagt ragen die Längs- bzw. der Querträger 23, 23', 24 des Drehgestells bezüglich einer durch die Radachse 27, 27', 27", 27''' der Räder 21, 21', 21", 21''' definierten Ebene nach unten, wobei die Hydraulikmotoren 22, 22', 22", 22''' um nicht mehr als denselben Betrag wie die Längs- bzw. Querträger 23, 23', 24 nach unten ragen. Der bezüglich des Bodens oder Schienenoberfläche tiefste Punkt des Drehgestellrahmens wird somit durch die dem Boden bzw. der Schienenoberfläche zugewandte Unterseite 210, 210', 211 der Längs- und des Querträgers gebildet.

Insbesondere aus der Figur 3 ist ersichtlich, dass die Hydraulikmotoren 22, 22', 22", 22''' jeweils eine Antriebsachse 28, 28', 28", 28''' aufweisen, welche sich oberhalb einer durch die Radachsen 27, 27', 27", 27''' der Räder 21, 21', 21", 21''' definierten Ebene befinden. In anderen Worten gesagt befinden sich die Hydraulikmotoren 22, 22', 22", 22''' bezüglich der Radachsen 27, 27', 27", 27''' der Räder 21, 21', 21", 21''' nach oben versetzt im Drehgestell. Entsprechend sind auch die Kardanwellen 25, 25', 25", 25''', welche die Hydraulikmotoren 22, 22', 22", 22''' mit den Rädern 21, 21', 21", 21''' verbinden, geneigt zwischen den Hydraulikmotoren und den Rädern im Drehgestell 2 ausgebildet.

Jedes Rad verfügt über eine eigene Antriebsschlupfregulierung, eine eigene dynamische Betriebsbremse beziehungsweise Fahrbremse sowie eine eigene statische Parkbremse.

Wie aus den Figuren 5 bis 8 hervorgeht, unterscheidet sich das Schienenfahrzeug 1' gemäss der zweiten Ausführungsform vor allem dadurch vom Schienenfahrzeug gemäss der ersten Ausführungsform, dass ersteres zusätzlich über verstellbare Stützen 31, 31', 31", 31''', jedoch über keine Rampe 5 verfügt. Es ist jedoch denkbar, dass auch das Schienenfahrzeug 1' gemäss der zweiten Ausführungsform über eine Rampe 5 verfügt. Die Stützen 31, 31', 31", 31''' dienen einerseits dazu, das Schienenfahrzeug 1' während der Arbeit zu stabilisieren. Sie dienen andererseits aber auch dazu, das Schienenfahrzeug 1' selbstständig und ohne äussere Hilfsmittel in unterschiedliche Positionen zu versetzen, in welchen bestimmte Vorgänge am respektive mit dem Schienenfahrzeug 1' ausgeführt werden können.

Wie nachfolgend eingehend erläutert wird, lassen sich die Stützen 31, 31', 31", 31''' in mindestens drei Stellungen bringen.

Eine erste Stellung ist in den Figuren 5 und 6 illustriert. Diese Stellung kann als Parkstellung bezeichnet werden. In dieser Stellung sind die Stützen 31, 31', 31", 31'" so angeordnet, dass sie bei einem Transport von Arbeitsgeräten mittels des Schienenfahrzeugs 1' (siehe Figuren 5 und 6) und/oder einem Transport des Schienenfahrzeugs 1' mittels eines externen Transportfahrzeugs 6 nicht stören. In der Parkstellung sind die Stützen 31, 31', 31 ", 31'" auf eine minimale Länge eingezogen und erstrecken sich in Tragrahmenlängsrichtung TL lateral entlang des Tragrahmens 11. In diesem Zustand liegen die Räder 21, 21', 21", 21''' des Schienenfahrzeugs 1' auf einer Oberfläche, hier auf der Schienenoberfläche, auf und ein Fortbewegen des Schienenfahrzeugs 1' durch das Schienenfahrzeug 1' selbst ist möglich.

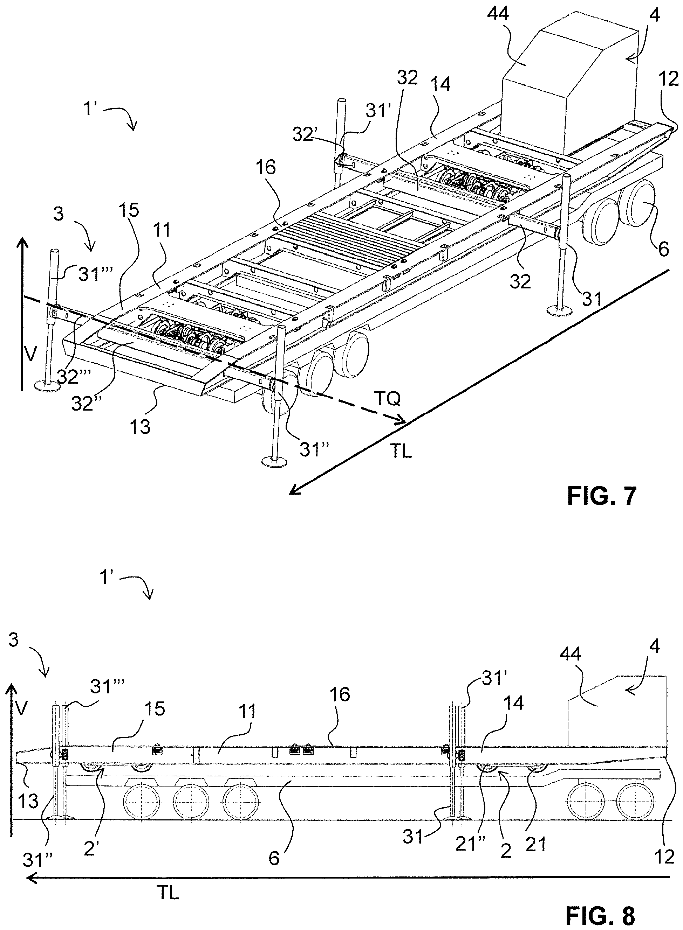

Eine zweite Stellung ist in den Figuren 7 und 8 illustriert. Diese Stellung kann als Verladestellung bezeichnet werden. In der Verladestellung sind die Stützen 31, 31', 31", 31''' gegenüber der Parkstellung verschwenkt, lateral aus dem Tragrahmen 11 ausgeschoben und so weit entlang ihrer Hubrichtung ausgefahren, dass das Schienenfahrzeug 1' aus dem Gleisbett angehoben wird und ein Transportfahrzeug 6 unter das Schienenfahrzeug 1' fahren konnte. Auf diese Weise kann das Schienenfahrzeug 1' ohne weitere Hilfsmittel auf das Transportfahrzeug 6 verladen werden. Damit nun ein Transport des Schienenfahrzeugs 1' mittels des Transportfahrzeugs 6 erfolgen kann, werden die Stützen 31, 31', 31", 31''' in vertikaler Richtung V auf eine minimale Länge eingefahren. Auch wird der seitliche Abstand der Stützen vom Tragrahmen 11 weitgehend verringert. Alsdann werden die Stützen erneut verschwenkt, so dass das Schienenfahrzeug auf dem Transportfahrzeug 6 aufsetzt und sich die Stützen 31, 31', 31", 31''' lateral entlang des Tragrahmens 11 erstrecken.

Eine dritte Stellung kann als Arbeitsstellung bezeichnet werden. Diese Stellung ist nicht zeichnerisch dargestellt. In der Arbeitsstellung sind die Stützen, ähnlich wie in der Verladestellung, lateral aus dem Tragrahmen ausgeschoben. Allerdings sind sie nur so weit entlang ihrer Hubrichtung ausgefahren, dass sie das Schienenfahrzeug gegen seitliches Verkippen sichern. Dazu wird das Schienenfahrzeug gar nicht oder höchstens um einige Zentimeter aus dem Gleisbett angehoben.

Diese unterschiedlichen Stellungen werden dem Schienenfahrzeug 1' durch seinen Verstellmechanismus 3 ermöglicht, welcher nun eingehend erläutert wird.

Jeweils zwei Stützen 31, 31' sind im proximalen Bereich 14 und zwei Stützen 31 ", 31''' sind im distalen Bereich 15 des Tragrahmens 11 einander lateral gegenüberliegend am Tragrahmen 11 gelagert. Die Stützen 31, 31', 31 ", 31'" sind um die Tragrahmenquerrichtung TQ verschwenkbar sowie entlang der Tragrahmenquerrichtung TQ lateral verschiebbar ausgebildet. Dazu weisen die Stützen jeweils einen Verstellmechanismus 3 auf, welcher mittels eines Ausschubmechanismus ein laterales Ausschieben der Stützen in eine ausgeschobene Stellung beziehungsweise ein laterales Einschieben der Stützen in eine eingeschobene Stellung ermöglicht. Zudem verfügt der Verstellmechanismus 3 über einen Verschwenkmechanismus sowie einen Verriegelungsmechanismus, wobei der Verschwenkmechanismus ein Verschwenken der Stützen um die Tragrahmenquerrichtung TQ in eine horizontale Schwenkstellung und in eine vertikale Schwenkstellung ermöglicht, und wobei der Verriegelunsgmechanismus ein Verschwenken der Stützen verhindert beziehungsweise freigibt.

Dieser Verstellmechanismus 3 ist in einem Tragrohr 32, 32', 32", 32''' angeordnet, welches als ein im Wesentlichen rechteckiger Hohlkörper ausgebildet ist und seitlich fix mit dem Tragrahmen 11 verbunden, insbesondere damit verschweisst ist. Wie in den Figuren 7 und 10 ersichtlich ist, sind im proximalen Bereich 14 sowie im distalen Bereich 15 des Tragrahmens 11 jeweils zwei Stützen 31, 31' bzw. 31", 31''' und zwei Tragrohre 32, 32' bzw. 32", 32''' vorgesehen, wobei jeweils eine Stütze mit einem Tragrohr umfassend den obgenannten Verstellmechanismus 3 wirkverbunden ist. Die Tragrohre 32, 32', 32", 32''' sind dabei axial versetzt zueinander im Tragrahmen 11 angeordnet. Der Einfachheit halber wird der Verstellmechanismus im Folgenden für eine Stütze 31" und ihr zugehöriges Tragrohr 32" erläutert. Es gilt zu verstehen, dass diese Aussagen analog für die weiteren Stützen 31, 31', 31'" und die zugehörigen Tragrohre 32, 32', 32''' gelten.

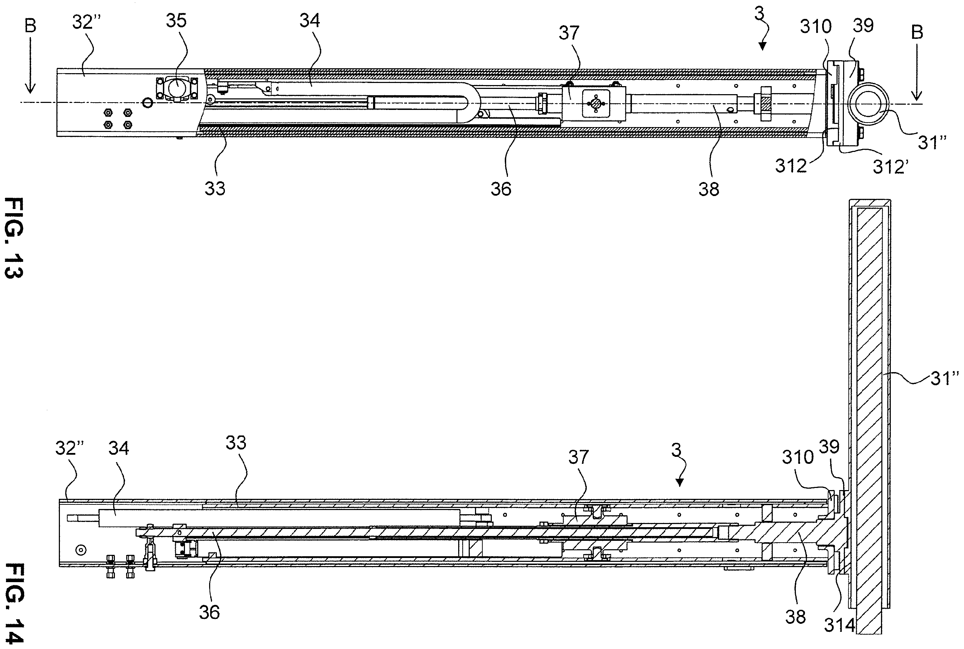

Wie beispielsweise aus Figur 14 hervorgeht, umfasst der Ausschubmechanismus 3 einen Ausschubzylinder 34 und ein Ausschubrohr 33, wobei das Ausschubrohr 33 gegenüber dem Tragrohr 32" teleskopierbar ist. Der Ausschubzylinder 34 ist ortsfest im Tragrohr 32" angeordnet und wirkt auf das Ausschubrohr 33, um dieses aus dem Tragrohr 32" auszuschieben. Das Tragrohr 32" und das Ausschubrohr 33 haben einen nichtrunden, insbesondere rechteckigen Querschnitt, wodurch eine drehfeste Verbindung zwischen dem Tragrohr 32" und dem Ausschubrohr 33 bereitgestellt wird.

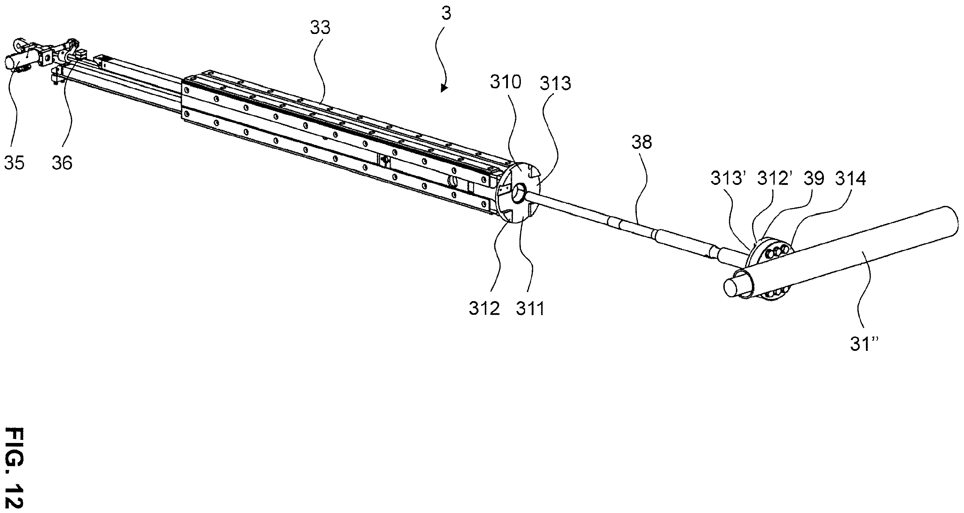

Insbesondere in den Figuren 13 und 14 sowie 17 und 18 ist ersichtlich, dass der Verriegelungsmechanismus sich im Ausschubrohr 33 befindet und einen Verriegelungszylinder 37, ein Zugrohr 38, eine Klauenplatte 39, sowie ein komplementär zur Klauenplatte 39 ausgebildetes Gegenstück 310 umfasst. Der Verriegelungszylinder 37 ist drehbar und axial fix im Ausschubrohr 33 gelagert. Das Zugrohr 38 ist gegenüber dem Ausschubrohr 33 axial verschiebbar, wobei der Verriegelungszylinder 37 auf das Zugrohr 38 wirkt, um dieses im Ausschubrohr 33 axial zu verschieben. Der Verriegelungszylinder 37 entspricht also einem Aktuator. Das Gegenstück 310 ist am Ende des Ausschubrohres 33 fest angebracht und das Zugrohr 38 ist mit einem Stützenkopf 314 der Stütze fest verbunden. Die Klauenplatte 39 ist dabei Teil des Stützenkopfs 314. Wird die Klauenplatte 39 durch das Zugrohr 38 zurückgezogen, wird diese in formschlüssigen Eingriff mit dem Gegenstück 310 gebracht. Dadurch wird eine Schwenkbewegung des Stützenkopfs 314, und somit der Stütze, gegenüber dem Ausschubrohr 33 verhindert. Wie beispielsweise aus Figur 12 hervorgeht, handelt es sich bei der Klauenplatte 39 und dem Gegenstück 310 um kreisförmige Platten, welche auf den einander gegenüberliegenden Plattenflächen 311, 311' jeweils Erhebungen 312, 312' beziehungsweise entsprechende Vertiefungen 313, 313' aufweisen, welche im Falle einer zurückgezogenen Klauenplatte 39 ineinandergreifen und dadurch die formschlüssige Verriegelung bewirken.

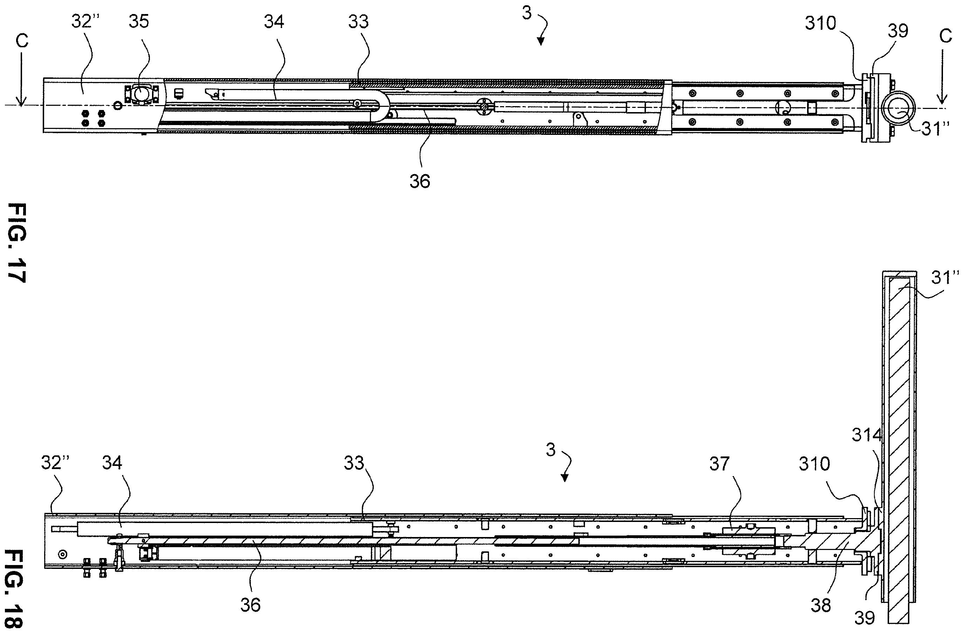

Der Verschwenkmechanismus umfasst einen Schwenkantrieb 35 sowie einen Drehstab 36, wobei der Schwenkantrieb 35 ortsfest am Tragrohr 32" angeordnet ist und der Drehstab 36 gegenüber dem Zugrohr 38 drehfest sowie teleskopierbar ist. Wie beispielsweise aus den Figuren 14und 17 hervorgeht, befindet sich der Schwenkantrieb 35 auf der Aussenseite des Tragrohrs 32" und erstreckt sich durch eine Seitenwand des Tragrohrs 32" in den Hohlraum des Tragrohrs 32" hinein und ist dort mit dem Drehstab 36 wirkverbunden. Der Drehstab 36 wiederum erstreckt sich entlang dem Ausschubzylinder 34 durch das Ausschubrohr 33 sowie durch den Verriegelungszylinder 37 hindurch und alsdann in das Zugrohr 38 hinein. Der Drehstab 36 dient dazu, eine Schwenkbewegung des Schwenkantriebs 35 auf das Zugrohr 38 zu übertragen. Da das Zugrohr 38 mit dem Stützenkopf 314 der Stütze verbunden ist, wird die Schwenkbewegung ebenfalls auf die Stütze übertragen. Dazu ist der Drehstab 36 als Sechskantstange und das Zugrohr 38 als rohrförmigen Innensechskant ausgebildet, wodurch eine drehfeste Verbindung zwischen dem Drehstab 36 und dem Zugrohr 38 bereitgestellt wird. Diese Ausgestaltung ermöglicht es, dass ein Verschwenken der Stütze unabhängig von der Ausschubposition der Stütze, also unabhängig von der Verschiebung der Stütze 31" entlang der Tragrahmenquerrichtung TQ relativ zum Tragrahmen 11, erfolgen kann.

In den Figuren 9 bis 11 und 13 bis 14 ist das Schienenfahrzeug 1' respektive dessen Verstellmechanismus 3 in der eingefahrenen Stellung gezeigt, wobei sich die Stütze 31" in unmittelbarer Nähe zum Tragrohr 32" befindet. Das Ausschubrohr 33 wie auch der Verriegelunszylinder 37 ist dabei vollständig im Tragrohr 32" aufgenommen. Während in Figur 13 die Klauenplatte 39 mittels des Zugrohrs 38 zurückgezogen ist und eine formschlüssige Verbindung mit dem Gegenstück 310 bildet, wurde in Figur 14 das Zugrohr 38 gegenüber dem Ausschubrohr 33 axial leicht verschoben. Dabei wurde auch die Klauenplatte 39 entsprechend verschoben, so dass sich die formschlüssige Verbindung zwischen der Klauenplatte 39 und dem Gegenstück 310 gelöst hat. Der Verriegelungsmechanismus befindet sich nun in einem entkoppelten Zustand respektive entriegelten Zustand und ein Verschwenken der Stütze 31" um die Tragrahmenquerrichtung TQ ist ermöglicht.

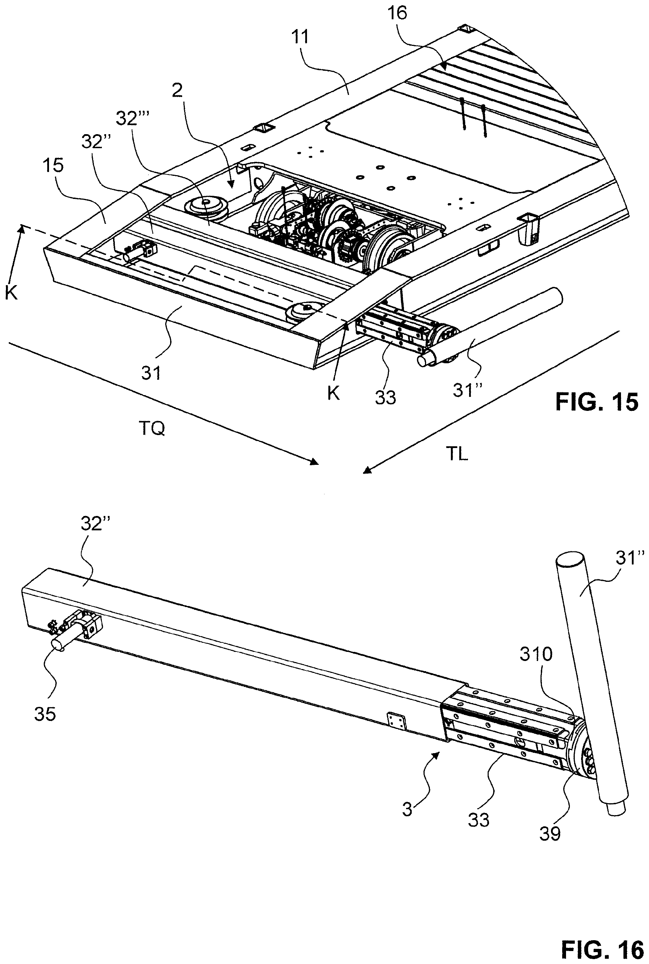

Die Figuren 15 bis 18 zeigen den Verstellmechanismus 3 in der teilweise ausgefahrenen Stellung, in welcher sich die Stütze 31" beabstandet zum Tragrohr 32" befindet. Das Ausschubrohr 33 ragt zumindest teilweise lateral aus dem Tragrohr 32" heraus. Während sich die Stütze in den Figuren 15, 17 und 18 in der horizontalen Schwenkstellung befindet, wurde die Stütze gemäss Figur 16 mittels des Verschwenkmechanismus in die vertikale Schwenkstellung überführt. Wie durch einen Vergleich der Figuren 13 und 14 mit dem Verstellmechanismus 3 in der eingefahrenen Stellung gegenüber den Figuren 17 bis 18 mit dem Verstellmechanismus 3 in der teilweise ausgefahrenen Stellung hervorgeht, wird der Verriegelungszylinder 37 beim Einfahren / Ausfahren der Stütze 31" an sich nicht verschoben. Die Positionsänderung in axialer Richtung erfährt der Verriegelungszylinder 37 im Zusammenhang mit dem Ausstossen des Ausschubrohres 33, wobei sich die Funktion des Verriegelungszylinders auf eine Positionsänderung der Klauenplatte 39 in Bezug zu deren Gegenstück 310, also deren Verriegeln beziehungsweise Entriegeln, beschränkt.

Obwohl in den Figuren nicht dargestellt, können in den Stützen 31, 31', 31", 31''' jeweils ein Drucksensor und/oder ein Längenmesssystem vorhanden sein, welche eine Kraft- bzw. Positionsüberwachung des Verstellmechanismus 3 erlaubt. Auch die Schwenkbewegung des Schwenkantriebs 35 sowie die Bewegung des Ausschubzylinders 34 können mit einem Längenmesssystem zu deren Positionsüberwachung ausgestattet sein.

Es ist denkbar, beim Schienenfahrzeug einen Dieselmotor vorzusehen, welcher mit einer Gesamtleistung von circa 130 Kilowatt betrieben wird und jeweils maximal 25 Kilowatt Leistung pro hydraulischen Motor überträgt. Mit solch einem dieselhydraulischen Antrieb kann ein Schienenfahrzeug betrieben werden, welches beispielsweise eine Länge von etwa 10 bis 15 Meter, vorzugsweise 12 bis 13 Meter, und eine Breite von etwa 2 bis 3 Meter, vorzugsweise 2.6 bis 2.7 Meter, aufweist. Zudem kann das Schienenfahrzeug dann ein Gesamtgewicht von etwa 40 bis 60 Tonnen, insbesondere 50 Tonnen, sowie eine Nutzlast von etwa 30 bis 40 Tonnen, insbesondere 35 Tonnen, aufweisen.

### BEZUGSZEICHENLISTE

- 1,1': Schienenfahrzeug
- 11: Tragrahmen
- 12: proximales Ende Tragrahmen
- 13: distales Ende Tragrahmen
- 14: proximaler Bereich Tragrahmen
- 15: distaler Bereich Tragrahmen
- 16: Ladefläche
- 17: Oberseite Tragrahmen
- 18: Unterseite Tragrahmen

- 2,2': Drehgestell
- 21,21', 21",21''': Rad
- 22,22' 22",22"': Hydraulikmotor
- 23,23': Längsträger
- 24: Querträger
- 25,25', 25",25''': Kardanwelle
- 26: Drehpfanne
- 27, 27', 27", 27''': Radachse
- 28, 28', 28", 28''': Antriebsachse
- 29: Lichtmass
- 210,210': Unterseite Längsträger
- 211: Unterseite Querträger
- 212,212': Oberseite Längsträger
- 213: Oberseite Querträger

- 3: Verstellmechanismus
- 31,31' 31",31''': Stütze
- 32,32' 32",32''': Tragrohr
- 33: Ausschubrohr
- 34: Ausschubzylinder
- 35: Schwenkantrieb
- 36: Drehstab
- 37: Verriegelungszylinder
- 38: Zugrohr
- 39: Klauenplatte
- 310: Gegenstück
- 311,311': Plattenfläche
- 312,312': Erhebung
- 313,313': Vertiefung
- 314: Stützenkopf

- 4: Antriebseinheit
- 41: Hydraulikpumpe
- 42: Dieselmotor
- 43: Generator
- 44: Motorhaube

- 5: Rampe

- 6: Transportfahrzeug

- L: Längsrichtung
- Q: Querrichtung
- TL: Tragrahmenlängsrichtung
- TQ: Tragrahmenquerrichtung
- V: vertikale Richtung

## Patentansprüche

1. Selbstfahrendes Schienenfahrzeug (1, 1') für den Transport von Arbeitsgeräten im Gleisbau, aufweisend:
einen Tragrahmen (11), der eine Ladefläche (16) zum Aufnehmen der Arbeitsgeräte aufweist; und
mindestens ein Drehgestell (2), welches mit dem Tragrahmen (11) in Verbindung steht und welches mindestens zwei Räder (21, 21') aufweist, die einander gegenüberliegend koaxial im Drehgestell (2) angeordnet sind,
**dadurch gekennzeichnet, dass** das Drehgestell (2) mindestens zwei Antriebsvorrichtungen (22, 22') aufweist, wobei jede der Antriebsvorrichtungen dazu ausgebildet ist, eines der Räder (21, 21') einzeln anzutreiben, und wobei die Antriebsvorrichtungen (22, 22') zueinander versetzt im Drehgestell (2) angeordnet sind.

2. Schienenfahrzeug (1, 1') nach Anspruch 1, wobei jedes der Räder (21, 21') über eine Kardanwelle (25, 25') mit der jeweiligen Antriebsvorrichtung (22, 22') verbunden ist.

3. Schienenfahrzeug (1, 1') nach einem der vorhergehenden Ansprüche, wobei das Drehgestell (2) einen Drehgestellrahmen umfassend zwei entlang einer Längsrichtung (L) verlaufende Längsträger (23, 23') und einen entlang einer Querrichtung (Q) verlaufenden Querträger (24) aufweist, und wobei das jeweilige Rad (21, 21') am einen Längsträger (23, 23') und die dieses Rad antreibende Antriebsvorrichtung (22, 22') am gegenüberliegenden Längsträger (23', 23) befestigt sind.

4. Schienenfahrzeug (1, 1') nach Anspruch 3, wobei das Drehgestell vier Räder (21, 21', 21", 21''') und vier Antriebsvorrichtungen (22, 22', 22", 22''') zum Einzelantrieb der vier Räder (21, 21', 21", 21''') aufweist, und wobei zwei der vier Räder (21, 21') und die zugehörigen Antriebsvorrichtungen (22, 22') proximal vom Querträger (24) und die anderen zwei der vier Räder (21", 21''') und die zugehörigen Antriebsvorrichtungen (22", 22''') distal vom Querträger (24) im Drehgestell (2) angeordnet sind.

5. Schienenfahrzeug (1, 1') nach einem der Ansprüche 3 oder 4, wobei sich die Antriebsvorrichtungen (22, 22', 22", 22''') innerhalb des durch die Längsträger (23, 23') sowie den Querträger (24) definierten Lichtmasses (29) befinden.

6. Schienenfahrzeug (1, 1') nach einem der vorhergehenden Ansprüche, wobei die Antriebsvorrichtungen (22, 22', 22", 22''') jeweils eine Antriebsachse (28, 28', 28", 28''') aufweisen, welche sich oberhalb einer durch die Radachsen (27, 27', 27", 27''') der Räder definierten Ebene befinden.

7. Schienenfahrzeug (1, 1') nach einem der vorhergehenden Ansprüche, wobei die Antriebsvorrichtungen (22, 22', 22", 22''') jeweils Hydraulikmotoren sind.

8. Schienenfahrzeug (1'), insbesondere selbstfahrendes Schienenfahrzeug nach einem der vorhergehenden Ansprüche, für den Transport von Arbeitsgeräten im Gleisbau, aufweisend:
einen Tragrahmen (11) mit einem proximalen Ende (12) und einem distalen Ende (13), wobei der Tragrahmen eine Ladefläche (16) zum Aufnehmen der Arbeitsgeräte aufweist und eine Tragrahmenlängsrichtung (TL) definiert, welche sich vom proximalen Ende (12) zum distalen Ende (13) des Tragrahmens (11) erstreckt; und
mindestens zwei Räder (21, 21');
**dadurch gekennzeichnet, dass** das Schienenfahrzeug (1') teleskopierbare Stützen (31, 31', 31", 31''') aufweist, wobei die Stützen (31, 31', 31", 31''') einen genügend grossen Hubweg aufweisen, so dass das Schienenfahrzeug (1') mittels der Stützen (31, 31', 31", 31''') von einer Oberfläche anhebbar ist, um das Schienenfahrzeug (1') auf ein Transportfahrzeug (6) zu verladen.

9. Schienenfahrzeug (1') nach Anspruch 8, wobei der Hubweg der Stützen (31, 31', 31 ", 31''') mindestens einen Meter beträgt.

10. Schienenfahrzeug nach Anspruch 8 oder 9, wobei die Stützen (31, 31', 31", 31''') um eine senkrecht zur Tragrahmenlängsrichtung (TL) verlaufende Tragrahmenquerrichtung (TQ) in eine Parkstellung verschwenkbar sind, wobei sich die Stützen (31, 31', 31", 31 ") in der Parkstellung vorzugsweise entlang des Tragrahmens (11) in Tragrahmenlängsrichtung (TL) erstrecken.

11. Schienenfahrzeug (1') nach einem der Ansprüche 8 bis 10, weiter umfassend einen Ausschubmechanismus, der bewirkt, dass die Stützen (31, 31', 31", 31") relativ zum Tragrahmen (11) entlang der Tragrahmenquerrichtung (TQ) verschiebbar sind, während das Schienenfahrzeug (1') mittels der Stützen aus dem Gleisbett gehoben ist, so dass das Schienenfahrzeug (1') mittels der Stützen lateral versetzbar ist.

12. Schienenfahrzeug (1, 1') nach einem der vorhergehenden Ansprüche, wobei der Tragrahmen (11) lateral über Verbindungsmittel verfügt, welche mit entsprechenden Verbindungsmitteln an Seitenwänden zur lateralen Begrenzung der Ladefläche (12) und/oder an Zusatzplatten zur Verbreiterung der Ladefläche (12) in Tragrahmenquerrichtung (Q) verbindbar sind.

13. Schienenfahrzeug (1, 1') nach einem der vorhergehenden Ansprüche, weiter umfassend eine Steuereinrichtung zur Steuerung des Schienenfahrzeugs, wobei die Steuereinrichtung vorzugsweise eine Funksteuerung ist.

14. Verfahren zum Verladen eines Schienenfahrzeugs (1') nach einem der Ansprüche 8 bis 11 auf ein Transportfahrzeug (6), umfassend die Schritte:
- Ausfahren der Stützen (31, 31', 31", 31"), so dass das Schienenfahrzeug (1') von einer Oberfläche angehoben wird;
- Verfahren des Transportfahrzeugs (6), so dass das Transportfahrzeug (6) unter das angehobene Schienenfahrzeug (1') gelangt; und
- Einfahren der Stützen (31, 31', 31", 31 "), so dass das Schienenfahrzeug (1') auf dem Transportfahrzeug (6) abgesetzt wird.

15. Verfahren zum lateralen Versetzen eines Schienenfahrzeugs (1') nach Anspruch 11, umfassend die Schritte:
- Ausfahren der Stützen (31, 31', 31", 31"), so dass das Schienenfahrzeug (1') von einer Oberfläche angehoben wird; und
- Verschieben der Stützen (31, 31', 31", 31") relativ zum Tragrahmen (11) entlang der Tragrahmenquerrichtung (TQ), während das Schienenfahrzeug (1') mittels der Stützen aus dem Gleisbett gehoben ist, um das Schienenfahrzeug (1') mittels der Stützen lateral zu versetzen.
